# EUROPEAN PATENT SPECIFICATION

(11) **EP 3 950 218 B1**
(45) Date of publication and mention of the grant of the patent: **02.10.2024**
(21) Application number: 21189494.4
(22) Date of filing: 03.08.2021
(51) Int. Cl.: B23Q 7/04, B27M 1/08

(54) **WORK CENTRE TO PROCESS SECTION BARS, IN PARTICULAR MADE OF ALUMINIUM, LIGHT ALLOYS, PVC OR THE LIKE**
ARBEITSSTATION ZUR VERARBEITUNG VON PROFILSTÄBEN, INSBESONDERE AUS ALUMINIUM, LEICHTLEGIERUNGEN, PVC ODER DERGLEICHEN
CENTRE DE TRAVAIL POUR TRAITER DES BARRES DE SECTION, EN PARTICULIER EN ALUMINIUM, EN ALLIAGES LÉGERS, EN PVC OU ANALOGUES

(30) Priority: 03.08.2020 IT 202000019021
(43) Date of publication of application: 09.02.2022
(73) Proprietor: F.O.M. Industrie S.r.l., 47841 Cattolica (IT)
(72) Inventor: LATTANZI, Lorenzo, 61121 Pesaro (PU) (IT)
(74) Representative: Studio Torta S.p.A.

(56) References cited:
- EP-A1- 3 636 384
- EP-A2- 1 992 464
- WO-A1-2020/144597
- DE-A1- 102015 212 541

## Description

### TECHNICAL FIELD

The invention relates to a work centre to process section bars, in particular made of aluminium, light alloys, PVC or the like.

### PRIOR ART

In the section bar processing industry, work centres are known, which comprise an elongated base extending in a first, substantially horizontal direction; a processing station, which is obtained along the base and is provided with an operating head to process the section bars; and at least one gripping and transporting unit, which is movable along the base and through the processing station.

The gripping and transporting unit has a clamping vice provided with two jaws, which are movable relative to one another in a second direction, which is substantially horizontal and transverse to the first direction, between a clamping position and a release position to clamp and release at least one section bar.

The work centre further comprises at least one loading and/or unloading station, which is obtained along the base in order to load the section bars to be processed into the clamping vice and/or unload the section bars that were just processed from the clamping vice. Such work centres are known for example from Patent Document DE 10 2015 212541 A1, on which the preamble of appended claim 1 is based.

Known work centres of the type described above are affected by some drawbacks, which are mainly due to the fact that the loading/unloading of the section bars into/from the clamping vice is manually carried out by operators and, hence, is relatively time-consuming and imprecise.

### SUBJECT-MATTER OF THE INVENTION

The object of the invention is to provide a work centre to process section bars, in particular made of aluminium, light alloys, PVC or the like, which is designed to eliminate the aforementioned drawbacks in a straightforward, relatively low-cost manner.

According to the invention, there is provided a work centre to process section bars, in particular made of aluminium, light alloys, PVC or the like, according to the appended claims.

### BRIEF DESCRIPTION OF THE DRAWINGS

The invention will now be described with reference to the accompanying drawings, showing a non-limiting embodiment thereof, wherein:
figure 1 is a schematic perspective view, with parts removed for greater clarity, of a preferred embodiment of the work centre according to the invention;
figure 2 is a schematic side view, with parts removed for greater clarity, of the work centre of figure 1;
figure 3 is a schematic perspective view, with parts removed for greater clarity, of a first detail of the work centre of figure 1;
figures 4 and 5 show two schematic perspective views, with parts removed for greater clarity, of a second detail of the work centre of figure 1;
figure 6 is a schematic side view of a detail of figures 4 and 5;
figure 7 is a schematic perspective view, with parts removed for greater clarity, of a third detail of the work centre of figure 1; and
figure 8 is a schematic perspective view, with parts removed for greater clarity, of a fourth detail of the work centre of figure 1.

### PREFERRED EMBODIMENT OF THE INVENTION

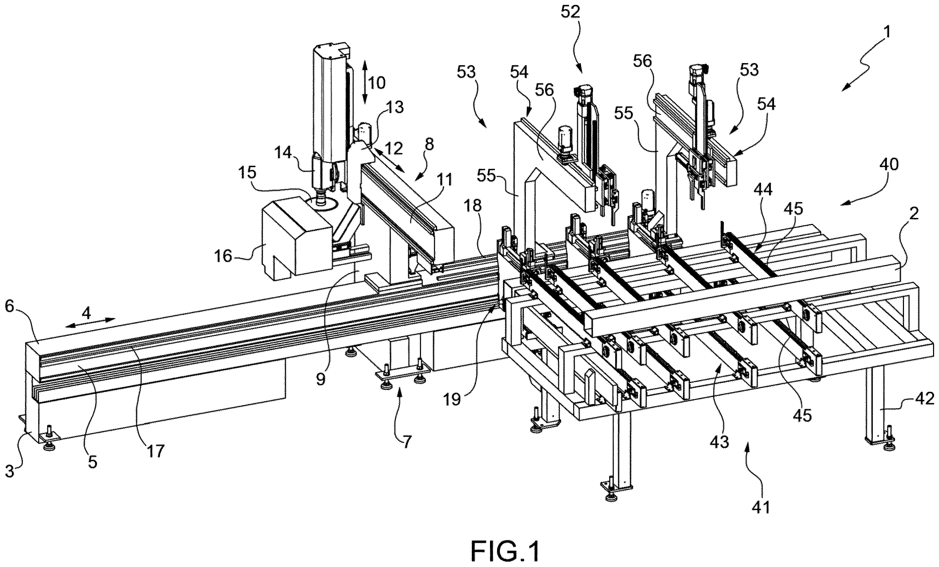

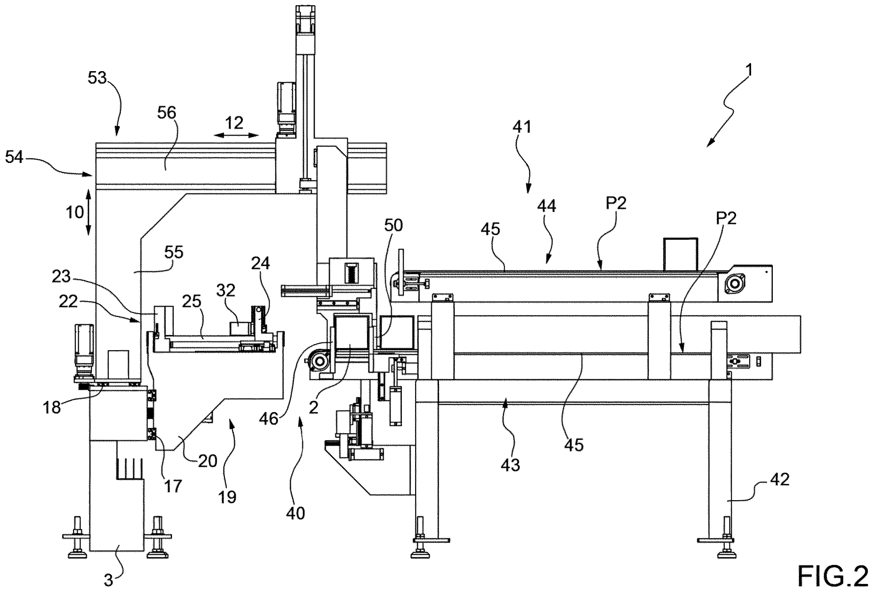

With reference to figures 1 and 2, number 1 indicates, as a whole, a work centre to process section bars 2 made of aluminium, light alloys, PVC or the like and with an elongated shape.

The work centre 1 comprises an elongated base 3, which extends in a horizontal direction 4, is delimited by a substantially flat and vertical front face 5 and is further delimited by a substantially flat and horizontal upper face 6.

The work centre 1 further comprises a processing station 7, which is obtained in an intermediate point of the base 3 ad is provided with a gantry 8 comprising, in turn, a vertical upright 9, which is substantially parallel to a direction 10 transverse to the direction 4, and a horizontal cross member 11, which is substantially parallel to a direction 12 orthogonal to the directions 4 and 10.

The gantry 8 is fixed in the direction 4 and supports an operating head 13, which is coupled to the cross member 11 in a sliding manner so as to make straight movements along the cross member 11 in the direction 12 and is provided with an electrospindle 14, which is coupled to the head 13 in a sliding manner 13 in order to move in the direction 10.

The electrospindle 14 carries, fitted in it, a tool 15 to process the section bars 2 (for example, for milling and/or boring and/or cutting operations) and cooperates with a tool-holding store 16 connected to the upright 9.

The work centre 1 further has a first guide device 17, which is obtained on the face 5 parallel to the direction 4 and extends between the free ends of the base 3 and, hence, substantially along the entire base 3, and a second guide device 18, which is obtained on the face 6 parallel to the direction 4 and extends between the station 7 and a free end of the base 3.

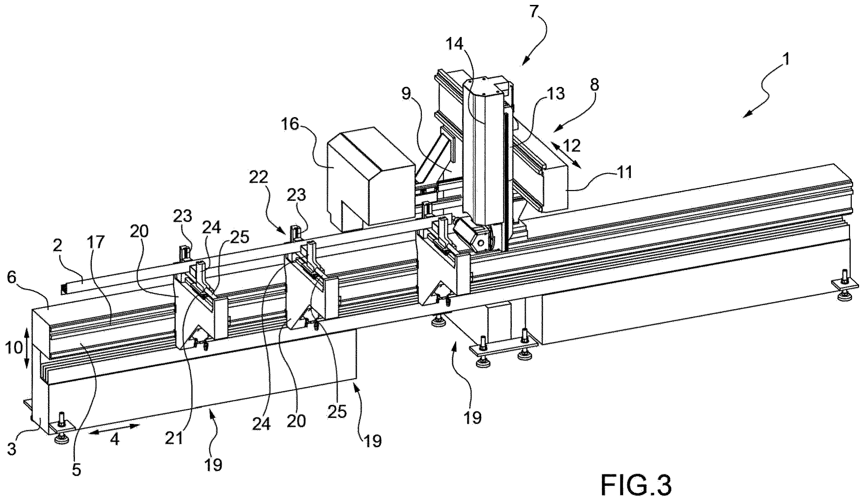

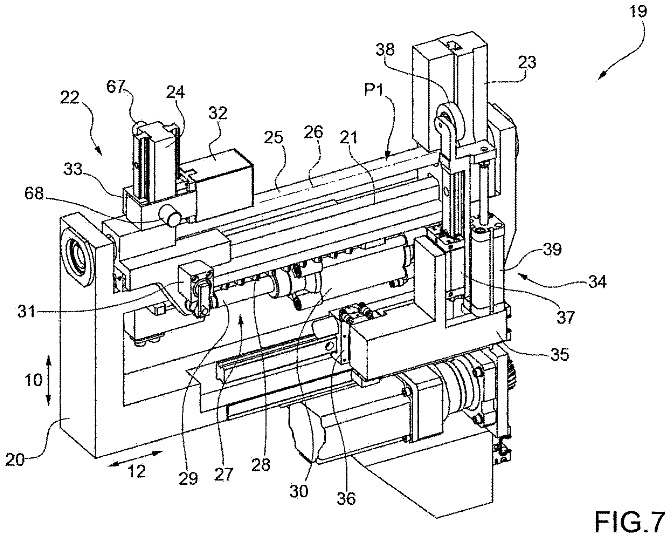

According to figures 3 and 7, the work centre 1 further comprises a plurality of gripping and transporting units 19 (specifically, three gripping and transporting units 19), which are mounted on the base 3 so as to move the section bars 2 in the direction 4.

Each unit 19 comprises a motor-drive slide 20, which is coupled to the guide device 17 in a sliding manner so as to move along the base 3 in the direction 4 and has the shape of a shelf projecting from the face 5 in the direction 12.

The slide 20 is provided with a straight guide 21 fixed on an upper face of the slide 20 parallel to the direction 12 and supports a clamping vice 22 comprising two gripping jaws 23, 24 extending upwards from the slide 20 in the direction 10.

The vice 22 further comprises a support roller 25, which extends through the jaws 23, 24 in the direction 12, is mounted so as to rotate around a rotation axis 26 parallel to the direction 12 and defines, together with the rollers 25 of the other vices 22, a horizontal support surface P1 for a section bar 2.

The jaw 23 is fixed in the direction 12 and the jaw 24 is coupled to the guide 21 in a sliding manner so as to make straight movements in the direction 12 between a clamping position and a release position to clamp and release a section bar 2.

The jaw 24 is moved along the guide 21 by an operating device 27 comprising a rack 28, which extends along the slide 20 in the direction 12, is coupled to the slide 20 in a sliding manner and is connected to an output rod 29 of an actuator cylinder 30, which is fixed on the slide 20 parallel to the direction 12.

The jaw 24 is locked on the rack 28 by means of an actuator cylinder 31, which is mounted on the jaw 24 parallel to the direction 4 and has an output rod (not shown), whose disengagement from the rack 28 allows the jaw 24 to be selectively moved along the rack 28 in the direction 12.

The jaw 24 is further provided with a buffer 32 made of elastically deformable material, which is coupled to the jaw 24 in a sliding manner so as to make straight movements in the direction 10 and is provided with a locking device 33 to lock the buffer 32 on the jaw 24.

The unit 19 is further provided with a roller support device 34 comprising a horizontal slide 35, which is coupled to the slide 20 in a a sliding manner so as to move along the slide 20 in the direction 12 and has a locking device 36 to lock the slide 35 on the slide 20.

The device 34 further comprises a vertical slide 37, which is provided with an upper roller 38 supporting the section bars 2 and is coupled to the slide 35 in a sliding manner so as to move in the direction 10 due to the thrust of an upper cylinder 39, which is mounted on the slide 35 parallel to the direction 10.

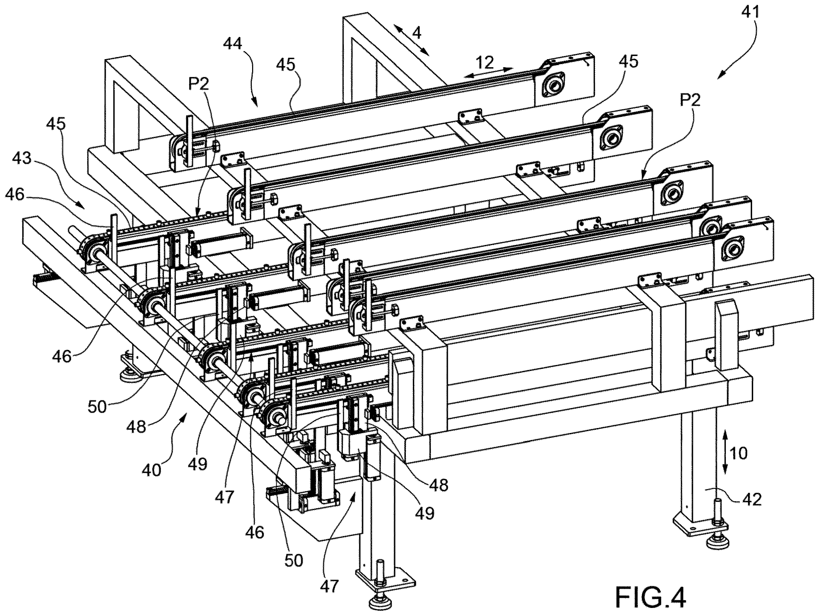

With reference to figures 1, 2, 4 and 5, the work centre 1 further comprises a loading/unloading station 40 to load/unload the section bars 2 into/from the gripping and transporting units 19.

The station 40 is aligned with the guide device 18 in the direction 12 and cooperates with a feeding unit 41, which extends in the direction 12 and comprises a support frame 42, on which there are mounted a lower conveyor device 43 to feed the section bars 2 to be processed to the station 40 and an upper conveyor device 44 to remove the section bars 2 that were just processed from the station 40.

The device 43 is arranged under the device 44 and projects from the device 44 towards the base 3 in the direction 12.

Each device 43, 44 comprises a plurality of motor-driven belt conveyors 45, which are parallel to one another and to the direction 12 and define a substantially horizontal support surface P2 for the section bars 2.

The device 43 cooperates with a plurality of limit stop elements 46, each fixed to the frame 42 between two adjacent conveyors 45, mounted in the area of the station 40 and projecting upwards from the surface P2 of the device 43 in the direction 10.

Each section bar 2 is pushed, so as to come into contact with the elements 46, by a plurality of pushing devices 47, each mounted between two adjacent conveyors 45 and comprising a horizontal slide 48, which is coupled to the frame 42 so as to make straight movements in the direction 12, and a vertical slide 49, which is coupled to the slide 48 so as to make straight movements in the direction 10.

The slide 49 is provided with a pushing rod 50, which extends in the direction 10 and is moved by the slide 49 between a raised operating position, in which the rod 50 projects above the surface P2 of the device 43, and a lowered rest position, in which the rod 50 extends under the surface P2 of the device 43.

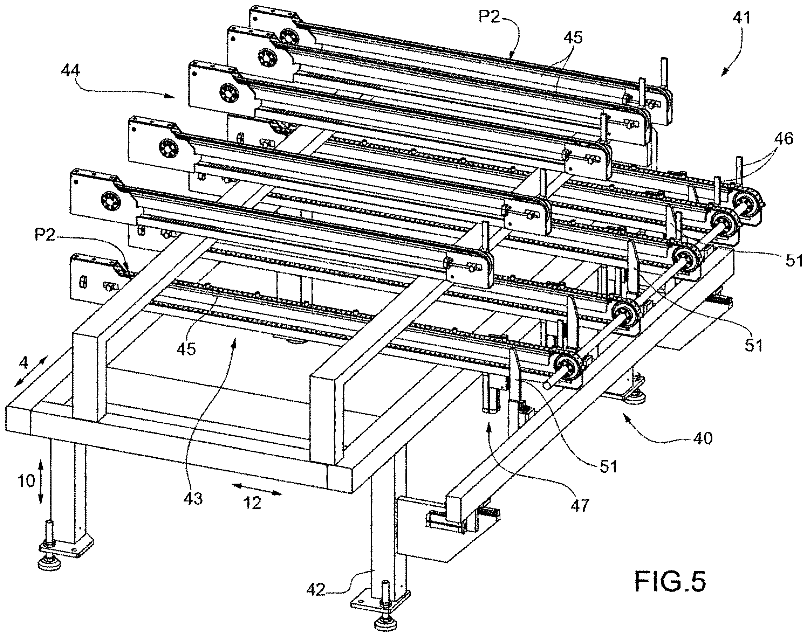

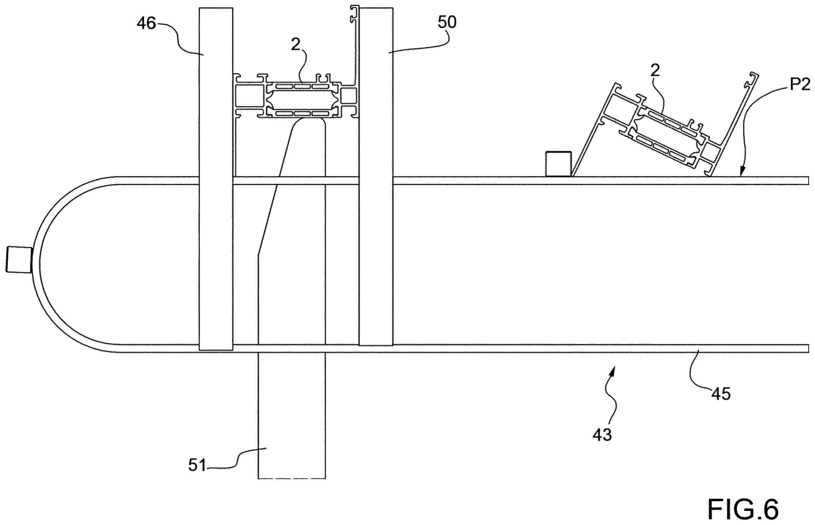

According to figures 5 and 6, the device 43 further cooperates with a plurality of lifting elements 51, which are mounted between the elements 46 and the rods 50.

Each element 51 is mounted between two adjacent conveyors 45, extends in the direction 10 and is movable in the direction 10 itself between a raised operating position, in which the element 51 projects above the surface P2 of the device 43 so as to rotate - and ensure the correct positioning of - shaped section bars 2, and a lowered rest position, in which the rod 50 extends under the surface P2 of the device 43.

According to a variant which is not shown herein, the elements 51 are movable in direction 12.

With reference to figure 1, the station 40 is provided with a transfer assembly 52 to transfer the section bars 2 between the devices 43, 44 and the vices 22.

The assembly 52 comprises a plurality of transfer units 53 (specifically, two units 53) mounted on the guide device 18.

Each unit 53 comprises an overhead crane 54 having a vertical upright 55, which extends upwards from the base 3 in the direction 10, is coupled to the device 18 in a sliding manner so as to make straight movements along the base 3 in the direction 4 and carries, connected to an upper free end of its, a horizontal cross member 56 extending above the base 3 and the station 40 in the direction 12.

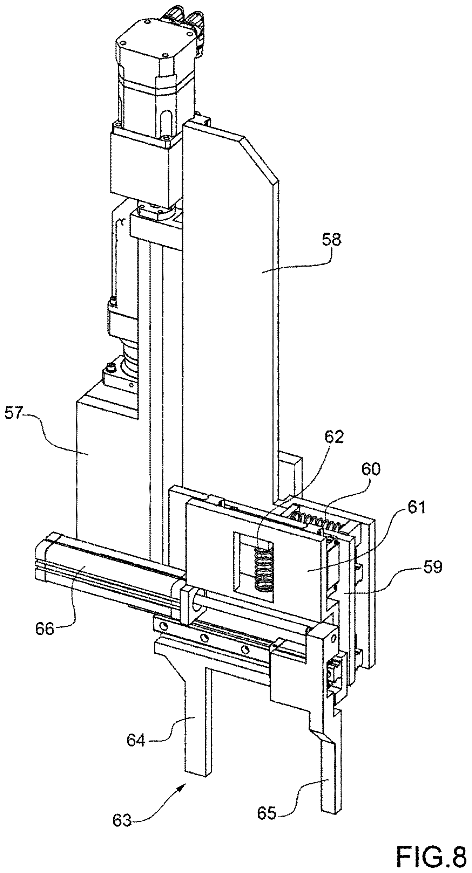

According to figure 8, the unit 53 further comprises a first horizontal slide 57, which is coupled to the cross member 56 in a sliding manner so as to make straight movements along the cross member 56 in the direction 12, and a first vertical slide 58, which is coupled to the horizontal slide 57 in a sliding manner so as to make straight movements along the horizontal slide 57 in the direction 10.

The unit 53 further comprises a second horizontal slide 59, which is coupled to the vertical slide 58 in a sliding manner through the interposition of a spring shock absorber device 60 so as to make straight movements along the vertical slide 58 in the direction 12.

The unit 53 is further provided with a second vertical slide 61, which is coupled to the horizontal slide 59 in a sliding manner through the interposition of a spring shock absorber device 62 so as to make straight movements along the horizontal slide 59 in the direction 10.

The vertical slide 61 supports a clamping vice 63 comprising a fixed jaw 64 projecting downwards from the vertical slide 61 in the direction 10 and a movable jaw 65, which projects downwards from the vertical slide 61 in the direction 10 and is coupled to the vertical slide 61 in a sliding manner so as to make straight movements in the direction 12 between a clamping position and a release position to clamp and release a section bar 2 due to the thrust of an actuator cylinder 66, which is fixed to the vertical slide 61 parallel to the direction 12.

The devices 60, 62 allow the vices 63 to correctly retrieve the section bar 2 from the conveyors 45 of the device 43 and to correctly release the section bar 2 into the vices 22 regardless of the actual position of the section bar 2 on the conveyors 45 of the device 43 and of geometric shape differences of the section bar 2.

The devices 60, 62 further allow the vices 63 to place the section bar 2 in the vices 22 with an insertion thrust in the directions 10 and 12.

With regard to what discussed above, it should be pointed out that the vices 22 are U-shaped with a concavity facing upwards and the vices 63 are U-shaped with a concavity facing downwards.

The operation of the work centre 1 will now be described with reference to figures 1 and 2 and assuming that one single section bar 2 is processed.

The section bar 2 taken into account is fed by the conveyor device 43 to the loading/unloading station 40 and it comes into contact with the limit stop elements 46.

At this point, the pushing rods 50 of the pushing devices 47 are lifted above the surface P2 of the device 43 and moved along the frame 42 in the direction 12 so as to correctly place the section bar 2 against the elements 46 and allow the clamping vices 63 of the transfer assembly 52 to correctly transfer the section bar 2 into the clamping vices 22 of the gripping and transporting units 19.

When the second bar 2 has a shaped profile, the lifting elements 51 are also raised above the surface P2 of the device 43 so as to correctly position the section bar 2 and allow the pushing devices 47 to correctly lock it against the limit stop elements 46 and the clamping vices 63 of the transfer assembly 52 to correctly transfer it into the clamping vices 22 of the gripping and transporting units 19.

Subsequently, the section bar 2 is moved by the unit 19 along the base 3, at first, in order to allow the operating head 13 to process it and, then, in order to transfer it again to the station 40.

Finally, the section bar 2 is transferred, by means of the assembly 52, from the vices 22 of the units 19 onto the conveyor device 44.

The clamping vice 22 of each gripping and transporting unit 19 is set up by means of the clamping vice 63 of a transfer unit 53 depending on the shape and on the dimensions of the section bar 2 and according to an automatic set-up cycle comprising the steps of:
disengaging the actuator cylinder 31 from the rack 28;
grabbing a dragging pin 67 projecting from the jaw 24 by means of the vice 63 and moving the jaw 24 along the guide 21 in the direction 12;
engaging the actuator cylinder 31 again in the rack 28 in order to lock the jaw 24 along the guide 21;
releasing the locking device 33 of the buffer 32;
grabbing a dragging pin 68 projecting from the buffer 32 by means of the vice 63 and moving the buffer 32 along the jaw 24 in the direction 10;
activating the locking device 33 again in order to lock the buffer 32 along the jaw 24;
releasing the locking device 36 of the roller support device 34;
grabbing the upper roller 38 by means of the vice 63 and moving the horizontal slide 35 along the slide 20 in the direction 12; and
activating the locking device 36 again in order to lock the slide 35 along the slide 20.

According to some embodiments which are not shown herein:
the loading/unloading station 40 is eliminated and replaced by a loading station and an unloading station arranged on opposite sides of the processing station 7 in the direction 4;
the loading/unloading station 40 is eliminated and replaced by a loading station and an unloading station arranged on opposite sides of the base 3 in the direction 12;
the guide device 18 is obtained on a rear face of the base 3; and
the gantry 8 is movable along the base 3 in the direction 4.

According to a further variant which is not shown herein, the transfer assembly 52 is eliminated and replaced by a robotic manipulator comprising a plurality of articulated arms and a transfer unit mounted at the free end of the articulated arms.

The transfer unit comprises two locking vices, which are parallel to one another and are completely similar to the vices 63.

The clamping vices are movable relative to one another depending on the shape and on the dimensions of the section bars 2 and are cushioned by means of load cells contained in the articulated arms.

## Claims

1. A work centre to process section bars (2), in particular made of aluminium, light alloys, PVC or the like, comprising an elongated base (3) extending in a first, substantially horizontal direction (4); an operating head (13) to process the section bars (2); at least one gripping unit (19) having a first clamping vice (22) provided with two jaws (23, 24), which are movable relative to one another between a clamping position and a release position to clamp and release at least one section bar (2); at least one loading and/or unloading station (40), which is obtained along the base (3) in order to load the section bars (2) to be processed into the first clamping vice (22) and/or unload the section bars (2) that were just processed from the first clamping vice (22); a feeding unit (41) to feed the section bars (2) to and/or from the loading and/or unloading station (40); and a transfer assembly (52), which is arranged in the loading and/or unloading station (40) so as to transfer the section bars (2) to and/or from the first clamping vice (22); the transfer assembly (52) having at least one second clamping vice (63) provided with two jaws (64, 65), which are movable between a clamping position and a release position to clamp and release at least one section bar (2); and **characterized in that** the jaws (23, 24) of the first clamping vice (22) are movable relative to one another between their clamping position and their release position in a second direction (12), which is substantially horizontal and transverse to the first direction (4), and **in that** the feeding unit (41) is provided with a plurality of limit stop elements (46) mounted in the area of the loading and/or unloading station (40) so as to stop the section bars (2) in the second direction (12) and with a plurality of pushing devices (47), which are mounted in the area of the loading and/or unloading station (40) so as to lock the section bars (2) against the limit stop elements (46) in the second direction (12).

2. A work centre according to claim 1, wherein the transfer assembly (52) comprises at least one overhead crane (54), which extends above the loading and/or unloading station (40) in the second direction (12); the second clamping vice (63) being coupled to the overhead crane (54) so as to move in the second direction (12) and in a third direction (10), which is substantially vertical and orthogonal to said first and second directions (4, 12).

3. A work centre according to claim 2, wherein the transfer assembly (52) comprises at least one horizontal slide (59), which is coupled to the overhead crane (54) through the interposition of a first shock absorber spring device (60) so as to move in the second direction (12), and at least one vertical slide (61), which is coupled to the overhead crane (54) through the interposition of a second shock absorber spring device (62) so as to move in the third direction (10); the second clamping vice (63) being carried by one of said horizontal slide (59) and vertical slide (61).

4. A work centre according to claim 2 or 3, wherein the overhead crane (54) is movable along the base (3) in the first direction (4).

5. A work centre according to any one of the preceding claims, wherein the jaws (64, 65) of the second clamping vice (63) are movable in the second direction (12) between relative clamping and release positions.

6. A work centre according to claim 1, wherein the transfer assembly comprises a robotic manipulator comprising, in turn, a plurality of articulated arms and a clamping vice, which is movable between a clamping position and a release position to clamp and release at least one section bar (2).

7. A work centre according to any one of the preceding claims, wherein the pushing devices (47) are movable in the second direction (12) and in a third direction (10), which is substantially vertical and orthogonal to said first and second directions (4, 12).

8. A work centre according to any one of the preceding claims, wherein the feeding unit (41) is further provided with a plurality of lifting members (51), which are mounted in the area of the loading and/or unloading station (40), are distributed between the limit stop elements (46) and the pushing devices (47) in the second direction (12) and are movable in a third direction (10), which is substantially vertical and orthogonal to said first and second directions (4, 12), from and to a lifted operating position, in which the lifting members (51) lift the section bars (2) in order to allow them to be correctly locked between the limit stop elements (46) and the pushing devices (47) and in order to allow for a correct grip of the second clamping vice (63).

9. A work centre according to claim 8, wherein the lifting members (51) are movable in the second direction (12) .

10. A work centre according to any one of the preceding claims, wherein the first clamping vice (22) is U-shaped with a concavity facing upwards and the second clamping vice (63) is U-shaped with a concavity facing downwards.

## Patentansprüche

1. Ein Arbeitszentrum zur Bearbeitung von Profilstäben (2), insbesondere aus Aluminium, Leichtmetalllegierungen, PVC oder dergleichen, Folgendes umfassend: eine langgestreckte Basis (3), die sich in einer ersten, im Wesentlichen horizontalen Richtung (4) erstreckt; einen Arbeitskopf (13) zur Bearbeitung der Profilstangen (2); mindestens eine Greifeinheit (19) mit einem ersten Spannstock (22), der mit zwei Backen (23, 24) versehen ist, die relativ zueinander zwischen einer Spannposition und einer Freigabeposition beweglich sind, um mindestens eine Profilstange (2) einzuspannen und freizugeben; mindestens eine Belade- und/oder Entladestation (40), die entlang der Basis (3) angeordnet ist, um die zu bearbeitenden Profilstangen (2) in den ersten Spannstock (22) zu laden und/oder die gerade bearbeiteten Profilstangen (2) aus dem ersten Spannstock (22) zu entladen; eine Zuführeinheit (41) zum Zuführen der Profilstäbe (2) zu und/oder von der Belade-und/oder Entladestation (40); und eine Überführungsanordnung (52), die in der Belade- und/oder Entladestation (40) angeordnet ist, um die Profilstangen (2) zu und/oder von dem ersten Spannstock (22) zu überführen; wobei die Überführungsanordnung (52) mindestens einen zweiten Spannstock (63) aufweist, der mit zwei Backen (64, 65) versehen ist, die zwischen einer Spannposition und einer Freigabeposition bewegbar sind, um mindestens eine Profilstange (2) einzuspannen und freizugeben; und **dadurch gekennzeichnet, dass** die Backen (23, 24) des ersten Spannstocks (22) relativ zueinander zwischen ihrer Spannposition und ihrer Freigabeposition in einer zweiten Richtung (12) beweglich sind, die im Wesentlichen horizontal und quer zur ersten Richtung (4) verläuft, und **dadurch dass** die Zuführeinheit (41) mit einer Vielzahl von Endanschlagselementen (*limit stop elements*) (46) versehen ist, die im Bereich der Belade- und/oder Entladestation (40) montiert sind, um die Profilstangen (2) in der zweiten Richtung (12) anzuhalten, und mit einer Vielzahl von Schiebevorrichtungen (47), die im Bereich der Belade- und/oder Entladestation (40) angebracht sind, um die Profilstangen (2) gegen die Endanschlagselemente (46) in der zweiten Richtung (12) festzulegen.

2. Ein Arbeitszentrum nach Anspruch 1, wobei die Überführungsanordnung (52) mindestens einen Brückenkran (54) umfasst, der sich in der zweiten Richtung (12) oberhalb der Belade- und/oder Entladestation (40) erstreckt; wobei der zweite Spannstock (63) mit dem Brückenkran (54) so gekoppelt ist, dass er sich in der zweiten Richtung (12) und in einer dritten Richtung (10) bewegt, die im Wesentlichen vertikal und orthogonal zur genannten ersten und zweiten Richtung (4, 12) ist.

3. Ein Arbeitszentrum nach Anspruch 2, wobei die Überführungsanordnung (52) Folgendes umfasst: mindestens einen horizontalen Schlitten (59), der mit dem Brückenkran (54) unter Zwischenschaltung einer ersten Stoßdämpfer-Federvorrichtung (60) so gekoppelt ist, dass er sich in der zweiten Richtung (12) bewegt, und mindestens einen vertikalen Schlitten (61), der mit dem Brückenkran (54) unter Zwischenschaltung einer zweiten Stoßdämpfer-Federvorrichtung (62) so gekoppelt ist, dass er sich in der dritten Richtung (10) bewegt, wobei der zweite Spannstock (63) von einem von dem horizontalen Schlitten (59) und dem vertikalen Schlitten (61) getragen wird.

4. Ein Arbeitszentrum nach Anspruch 2 oder 3, wobei der Brückenkran (54) entlang der Basis (3) in der ersten Richtung (4) beweglich ist.

5. Ein Arbeitszentrum nach irgendeinem der vorstehenden Ansprüche, wobei die Backen (64, 65) des zweiten Spannstocks (63) in der zweiten Richtung (12) zwischen relativen Spann- und Freigabepositionen bewegbar sind.

6. Ein Arbeitszentrum nach Anspruch 1, wobei die Überführungsanordnung einen Roboter-Manipulator umfasst, der seinerseits eine Vielzahl von Gelenkarmen und einen Spannstock umfasst, der zwischen einer Spannposition und einer Freigabeposition beweglich ist, um mindestens eine Profilstange (2) einzuspannen und freizugeben.

7. Ein Arbeitszentrum nach irgendeinem der vorstehenden Ansprüche, wobei die Schiebevorrichtungen (47) in der zweiten Richtung (12) und in einer dritten Richtung (10) beweglich sind, die im Wesentlichen vertikal und orthogonal zur ersten und zweiten Richtung (4, 12) verläuft.

8. Ein Arbeitszentrum nach irgendeinem der vorstehenden Ansprüche von, wobei die Zuführeinheit (41) ferner mit einer Vielzahl von Hebeelementen (51) versehen ist, die im Bereich der Belade- und/oder Entladestation (40) montiert sind, zwischen den Endanschlagselementen (46) und den Schiebevorrichtungen (47) in der zweiten Richtung (12) verteilt sind, und die in einer dritten Richtung (10) bewegbar sind, die zur genannten ersten und zweiten Richtung (4, 12) im Wesentlichen vertikal und orthogonal ist, von und zu einer angehobenen Betriebsposition beweglich sind, in der die Hebeelemente (51) die Profilstangen (2) anheben, um ihre korrekte Verriegelung zwischen den Endanschlagselementen (46) und den Schiebevorrichtungen (47) zu ermöglichen und um einen korrekten Griff bzw. Halt (*grip*) des zweiten Spannstocks (63) zu erlauben.

9. Ein Arbeitszentrum nach Anspruch 8, wobei die Hebeelemente (51) in der zweiten Richtung (12) beweglich sind.

10. Ein Arbeitszentrum nach irgendeinem der vorstehenden Ansprüche, wobei der erste Spannstock (22) U-förmig mit einer nach oben gerichteten Konkavität und der zweite Spannstock (63) U-förmig mit einer nach unten gerichteten Konkavität ausgebildet ist.

## Revendications

1. Centre de travail pour traiter des barres de section (2), en particulier composées d'aluminium, d'alliages légers, de PVC ou similaires, comprenant une base allongée (3) s'étendant dans une première direction sensiblement horizontale (4) ; une tête fonctionnelle (13) pour traiter les barres de section (2) ; au moins une unité de préhension (19) ayant un premier étau de serrage (22) doté de deux mâchoires (23, 24), qui sont mobiles l'une par rapport à l'autre entre une position de serrage et une position de libération pour serrer et libérer au moins une barre de section (2) ; au moins une station de chargement et/ou déchargement (40), qui est obtenue le long de la base (3) afin de charger les barres de section (2) devant être traitées dans le premier étau de serrage (22) et/ou décharger les barres de section (2) qui viennent d'être traitées du premier étau de serrage (22) ; une unité d'introduction (41) pour introduire les barres de section (2) dans et/ou depuis la station de chargement et/ou déchargement (40) ; et un ensemble de transfert (52), qui est agencé dans la station de chargement et/ou déchargement (40) de manière à transférer les barres de section (2) dans et/ou depuis le premier étau de serrage (22) ; l'ensemble de transfert (52) ayant au moins un second étau de serrage (63) doté de deux mâchoires (64, 65), qui sont mobiles entre une position de serrage et une position de libération pour serrer et libérer au moins une barre de section (2) ; et **caractérisé en ce que** les mâchoires (23, 24) du premier étau de serrage (22) sont mobiles l'une par rapport à l'autre entre leur position de serrage et leur position de libération dans une deuxième direction (12), qui est sensiblement horizontale et transversale à la première direction (4), et **en ce que** l'unité d'introduction (41) est dotée d'une pluralité d'éléments d'arrêt de limite (46) montés dans la zone de la station de chargement et/ou déchargement (40) de manière à arrêter les barres de section (2) dans la deuxième direction (12) et d'une pluralité de dispositifs de poussée (47), qui sont montés dans la zone de la station de chargement et/ou déchargement (40) de manière à verrouiller les barres de section (2) contre les éléments d'arrêt de limite (46) dans la deuxième direction (12).

2. Centre de travail selon la revendication 1, dans lequel l'ensemble de transfert (52) comprend au moins un pont roulant (54), qui s'étend au-dessus de la station de chargement et/ou déchargement (40) dans la deuxième direction (12) ; le second étau de serrage (63) étant accouplé au pont roulant (54) de manière à se déplacer dans la deuxième direction (12) et dans une troisième direction (10), qui est sensiblement verticale et orthogonale auxdites première et deuxième directions (4, 12) .

3. Centre de travail selon la revendication 2, dans lequel l'ensemble de transfert (52) comprend au moins une glissière horizontale (59), qui est accouplée au pont roulant (54) par le biais de l'interposition d'un premier dispositif à ressort d'amortisseur (60) de manière à se déplacer dans la deuxième direction (12), et au moins une glissière verticale (61), qui est accouplée au pont roulant (54) par le biais de l'interposition d'un second dispositif à ressort d'amortisseur (62) de manière à se déplacer dans la troisième direction (10) ; le second étau de serrage (63) étant transporté par l'une de ladite glissière horizontale (59) et de ladite glissière verticale (61).

4. Centre de travail selon la revendication 2 ou 3, dans lequel le pont roulant (54) est mobile le long de la base (3) dans la première direction (4).

5. Centre de travail selon l'une quelconque des revendications précédentes, dans lequel les mâchoires (64, 65) du second étau de serrage (63) sont mobiles dans la deuxième direction (12) entre des positions de serrage et de libération relatives.

6. Centre de travail selon la revendication 1, dans lequel l'ensemble de transfert comprend un manipulateur robotique comprenant, à son tour, une pluralité de bras articulés et un étau de serrage, qui est mobile entre une position de serrage et une position de libération pour serrer et libérer au moins une barre de section (2).

7. Centre de travail selon l'une quelconque des revendications précédentes, dans lequel les dispositifs de poussée (47) sont mobiles dans la deuxième direction (12) et dans une troisième direction (10), qui est sensiblement verticale et orthogonale auxdites première et deuxième directions (4, 12).

8. Centre de travail selon l'une quelconque des revendications précédentes, dans lequel l'unité d'introduction (41) est en outre dotée d'une pluralité d'éléments de levage (51), qui sont montés dans la zone de la station de chargement et/ou déchargement (40), sont répartis entre les étapes d'arrêt de limite (46) et les dispositifs de poussée (47) dans la deuxième direction (12) et sont mobiles dans une troisième direction (10), qui est sensiblement verticale et orthogonale auxdites première et deuxième directions (4, 12), depuis et vers une position fonctionnelle surélevée, dans laquelle les éléments de levage (51) lèvent les barres de section (2) afin de leur permettre d'être correctement verrouillées entre les éléments d'arrêt de limite (46) et les dispositifs de poussée (47) et afin de permettre une préhension correcte du second étau de serrage (63).

9. Centre de travail selon la revendication 8, dans lequel les éléments de levage (51) sont mobiles dans la deuxième direction (12).

10. Centre de travail selon l'une quelconque des revendications précédentes, dans lequel le premier étau de serrage (22) est en forme de U avec une concavité dirigée vers le haut et le second étau de serrage (63) est en forme de U avec une concavité dirigée vers le bas.
